# EUROPÄISCHE PATENTSCHRIFT

(11) **EP 2 670 614 B1**
(45) Veröffentlichungstag und Bekanntmachung des Hinweises auf die Patenterteilung: **07.01.2015**
(21) Anmeldenummer: 12704024.4
(22) Anmeldetag: 03.02.2012
(51) Int. Cl.: B60K 15/04, B01D 35/02, B67D 7/42

(54) **FILTER ZUM EINSETZEN IN DEN EINFÜLLSTUTZEN EINES BEHÄLTERS**
FILTER FOR INSERTING INTO THE FILLER NECK OF A CONTAINER
FILTRE DESTINÉ À ÊTRE INTRODUIT DANS LA TUBULURE DE REMPLISSAGE D'UN RÉCIPIENT

(30) Priorität: 03.02.2011 DE 202011002684 U
(43) Veröffentlichungstag der Anmeldung: 11.12.2013
(73) Patentinhaber: Reutter GmbH, 71397 Leutenbach (DE)
(72) Erfinder: KOERBER, René, 71397 Leutenbach (DE)
(74) Vertreter: DREISS Patentanwälte PartG mbB
(86) Internationale Anmeldenummer: PCT/EP2012/051858
(87) Internationale Veröffentlichungsnummer: WO 2012/104414

(56) Entgegenhaltungen:
- FR-A- 908 341
- JP-A- 2004 217 141
- US-A- 1 581 947
- US-A- 2 647 636
- US-A- 3 826 372
- US-A1- 2010 200 115

## Beschreibung

Die vorliegende Erfindung bezieht sich auf einen Filter zum Einsetzen in einen insbesondere gekrümmten Einfüllstutzen eines Behälters, vorzugsweise Tanks für Kraftstoff oder Harnstofflösung oder andere Flüssigkeiten, nach dem Oberbegriff des Anspruchs 1.

Bekannt sind Filter, die einen Filterstrumpf aufweisen, der an einem Kopf eines Halters angespritzt ist und der über eine bestimmte Länge in den Einfüllstutzen des Behälters hineinragt, wobei die Länge des Filterstrumpfes von der Länge verwendeter Zapfpistolen und von der einzufüllenden Volumenmenge pro Zeiteinheit zur Verhinderung eines Rückstaus abhängig ist. Der Filterstrumpf eines derartigen Filters ist relativ flexibel und kann deshalb nicht so ohne Weiteres in einem Einfüllstutzen montiert werden. Außerdem ist der Filterstrumpf insoweit empfindlich, als die ungeschützten und unverstärkten Nähte bei der Montage dann leicht aufreißen können, wenn der Einfüllstutzen, in den der Filterstrom eingebracht werden soll, nicht ausschließlich geradlinig verläuft.

Beispiele für Filter, die einen Filterstrumpf aufweisen, sind der US 2,647,636, FR 908 341 oder US 2010/0200 115 zu ist nehmen.

Aufgabe der vorliegenden Erfindung ist es deshalb, einen Filter zum Einsetzen in den Einfüllstutzen eines Behälters zu schaffen, der in einfacherer Weise in den Einfüllstutzen montiert werden kann, ohne dass die Gefahr besteht, dass der Filterstrumpf gestaucht oder sonst wie beschädigt wird.

Mit den erfindungsgemäßen Maßnahmen ist erreicht, dass beim Einsetzen des Filters in den Einfüllstutzen insbesondere dann, wenn der Einfüllstutzen gekrümmt ist, der Filter diesem Verlauf ohne Weiteres folgen kann, ohne dass ein Beschädigen beispielsweise der Filterstrumpfnaht oder ein Stauchen des beispielsweise vorlaufenden Endes des Filterstrumpfes zu befürchten ist.

Vorteilhafte Ausgestaltungen der Aussteifung ergeben sich aus den Merkmalen eines oder mehrerer der Ansprüche 2 bis 4. Vorteilhaft dabei ist der außenumfangsseitige Verlauf der Aussteifung am Filterstrumpf, was eine Vereinfachung der Herstellung bedeutet. Die steg- oder bandartige Ausgestaltung der Aussteifung bringt Flexibilität in eine oder beide senkrecht zur Längserstreckung verlaufenden Richtungen mit sich.

Je nach Länge des Filterstrumpfes kann es vorteilhaft sein, die Merkmale nach Anspruch 5 vorzusehen, was ein mögliches Zusammenfalten des Filterstrumpfes während dessen Einsetzen in den Einfüllstutzen verhindert. Je nach Ausgestaltung des Filterstrumpfes, das heißt, ob er über seine gesamte Länge zylindrisch schlauchförmig ausgebildet ist oder ob er über eine Teillänge oder seine gesamte Länge keilartig ausgebildet ist, sind die Merkmale gemäß Anspruch 6 oder 7 vorgesehen. In beiden Fällen ist an der Aussteifung ein Element vorgesehen, dass das freie Ende abstützt oder überdeckt und damit aussteift.

Vorteilhafterweise sind ferner bei weiteren Ausführungsbeispielen die Merkmale gemäß Anspruch 8 und/oder 9 und/oder 10 vorgesehen, so dass einerseits die Verbindungsstellen des Filterstrumpfes geschützt sind und andererseits eine weitere Aussteifung des Filterstrumpfes erfolgt.

Gemäß den Merkmalen des Anspruchs 11 ist der Filter als Partikelfilter ausgebildet und aus einem Kunststoffgeflecht, das zu einer losen netzartigen Struktur führt. Entsprechend der Anwendung ist die Maschenweite des Filterstrumpfes gewählt.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
Figur 1 in schematischer perspektivischer Darstellung einen Filter zum Einsetzen in einen Einfüllstutzen eines Behälters gemäß einem ersten Ausführungsbeispiel vorliegender Erfindung,
Figur 2 in schematischer perspektivischer Darstellung einen Filter zum Einsetzen in den Einfüllstutzen eines Behälters gemäß einem zweiten Ausführungsbeispiel vorliegender Erfindung und
Figur 3 in schematischer perspektivischer Darstellung einen Filter zum Einsetzen in den Einfüllstutzen eines Behälters gemäß einem dritten Ausführungsbeispiel vorliegender Erfindung.

Der in der Zeichnung gemäß mehreren Ausführungsbeispielen dargestellte Filter 10, 110 bzw. 210, der bevorzugt als Partikelfilter ausgebildet ist, dient zum Einsetzen in einen insbesondere gekrümmten Einfüllstutzen eines Behälters, vorzugsweise eines Tanks für Kraftstoff, Harnstofflösungen oder andere Flüssigkeiten. Dabei besitzt der Filter 10 einen Filterstrumpf 11,111 bzw. 211 aus einem Kunststoffgeflecht mit einer bestimmten Maschenweite, der an einem Kopf 12, 112 bzw. 212 eines im Durchmesser abgestuften Halters 13, 113, 213 aus Kunststoff angespritzt oder in anderer Weise befestigt ist. Da der Filterstrumpf 11, 111,211 eine bestimmte von der verwendeten Einfüllpistole oder dergleichen und vom Einfülldruck bzw. Einfüllvolumen pro Zeiteinheit abhängig relativ lang ist, wird gemäß vorliegender Erfindung verhindert, dass der eine lose netzartige Struktur besitzende Filterstrumpf 11, 111 bzw. 211 beim Einsetzen des Filters 10, 110, 210 in einen insbesondere gekrümmten Einfüllstutzen weder beschädigt noch gestaucht oder in sonstiger Weise verformt wird. Hierzu besitzt der Filter 10, 110, 210 bzw. dessen Filterstrumpf 11, 111, 211 eine in zumindest Teilbereichen flexible Aussteifungsanordnung 15, 115 bzw. 215.

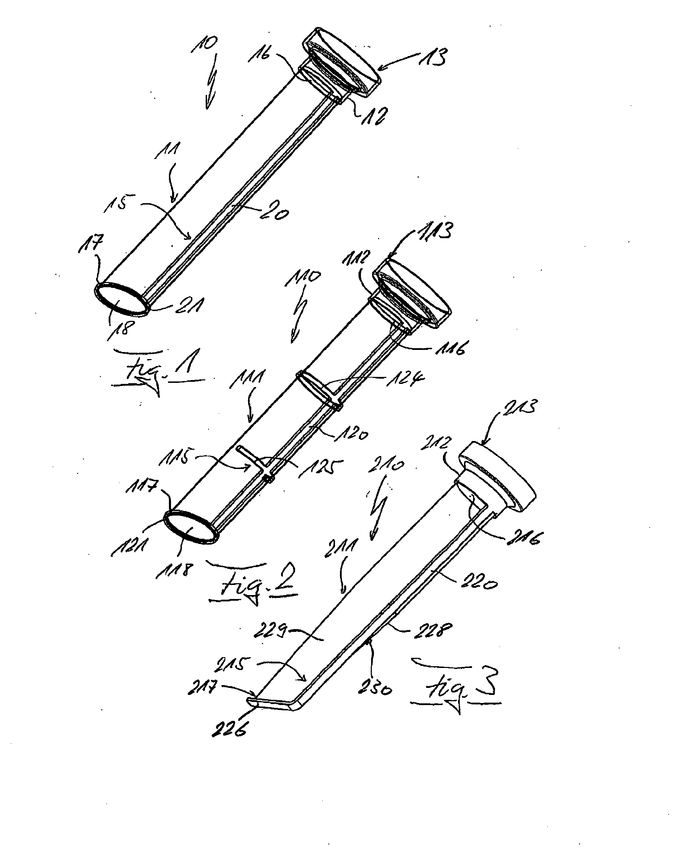

Figur 1 zeigt den Filter 10, dessen Filterstrumpf 11 über seine gesamte Länge schlauchförmig zylindrisch ausgebildet ist. Der Filterstrumpf 11 besitzt an seinem dem Einfüllende 16 abgewandten freien Ende 17 eine Abdeckscheibe 18, die entweder aus flüssigkeitsdurchlässigem Strumpfmaterial oder aus flüssigkeitsundurchlässigem Vollmaterial ausgebildet sein kann. Bei der Ausführung gemäß Figur 1 besteht die Aussteifungsanordnung 15 aus einem stegartigen oder hier bandartigen Aussteifungselement 20, das einenends mit dem Kopf 12 verbunden ist und andernends bis zum freien Ende 17 des Filterstrumpfes 11 verläuft. Somit verläuft dieses aus Kunststoff bestehende axiale Aussteifungselement 20 an einem Außenumfangsbereich des Filterstrumpfes 11 über dessen gesamte axiale Länge. Am Ende ist das axiale Aussteifungselement 20 mit einem Kunststoffring 21 verbunden, der die Umfangsverbindung zwischen dem freiem Ende 17 des Filterstrumpfs 11 der Abdeckscheibe 18 bildet.

In nicht dargestellter Weise überdeckt das Aussteifungselement 20 in bevorzugter Weise die nicht sichtbare Längsnaht des Filterstrumpfs 11. Außerdem ist das axiale Aussteifungselement 20 ganz oder in bestimmten axialen Abständen mit dem Filterstrumpf 11 bspw. punktförmig verbunden bzw. verschweißt. Das axiale Aussteifungselement 20 kann beliebige Querschnitte aufweisen.

Der in Figur 2 dargestellte Filter 110 ist im Grundsatz wie der Filter 10 nach Figur 1 aufgebaut, wobei die Aussteifungsanordnung 115 mit zusätzlichen Aussteifungselementen 124 und 125 versehen bzw. bestückt ist.

Die Aussteifungsanordnung 115 für den Filterstrumpf 111 besitzt ein axial verlaufendes Aussteifungselement 120, das dem Aussteifungselement 20 des Filters 10 gemäß Figur 1 entspricht. Gleiches gilt für den mit dem axialen Aussteifungselement 120 verbundenen Kunststoffring 121 sowie die wahlweise flüssigkeitsdurchlässig oder flüssigkeitsundurchlässig ausgebildete Abdeckscheibe 118.

Um zu verhindern, dass sich der Filterstrumpf 111 beim Einsetzen in einen gekrümmten Einfüllstutzen zumindest teilweise zusammenfaltet, ist das axiale Aussteifungselement 120 in bestimmten axialen Bereichen oder Abschnitten mit einem zusätzlichen Aussteifungselement bzw. Aussteifungsrippe 124 und/oder 125 versehen. Die zusätzliche Aussteifungsrippe 124 ist ein geschlossener Ring, der außenumfangseitig um den schlauchartigen zylindrischen Filterstrumpf 111 führt und mit dem axialen Aussteifungselement 120 verbunden oder einstückig ist. Die zusätzliche Aussteifungsrippe 125 bildet einen einseitig offenen Ring, dessen Öffnungsseite dem axialen Aussteifungselement 120 diametral gegenüberliegt. Auch diese zusätzliche Aussteifungsrippe 125 ist mit dem axialen Aussteifungselement 120 verbunden oder einstückig. Die Aussteifungsrippen 124 und 125 können dem axialen Aussteifungselement 120 radial abgewandt zusätzlich mit dem Filterstrumpf 111 punktartig verbunden sein.

Wenn auch bei der Ausführung des Filters 110 gemäß Figur 2 jeweils eine zusätzliche Aussteifungsrippe 124 und eine zusätzliche Aussteifungsrippe 125 dargestellt sind versteht es sich, dass abhängig von der axialen Länge des Filterstrumpfes 111 entweder nur eines oder mehr als zwei der Aussteifungselemente 124 und/oder 125 verwendet werden können.

Beim Filter 210 gemäß Figur 3 ist der Filterstrumpf 211 über einen Teil seiner axialen Länge nicht schlauchartig zylindrisch sondern schlauchartig keilförmig verlaufend ausgebildet, das heißt er besitzt eine im (nicht dargestellten) Querschnitt etwa rechteckförmige Ausbildung längs eines Endbereichs bestimmter axialer Länge.

Bei diesem Ausführungsbeispiel besitzt die Aussteifungsanordnung 215 ebenfalls ein axiales Aussteifungselement 220, das außenseitig längs dem zylindrischen Filterstrumpfbereich und längs einer Schmalseite 228 des keilförmigen Endbereichs 230 des Filterstrumpfes 211 verläuft. Auch dieses axiale Aussteifungselement 220 kann in bestimmten axialen Abständen beispielsweise punktartig mit dem zylindrischen Außenumfang bzw. der Schmalseite 228 des Filterstrumpfs 211 verbunden bzw. verschweißt sein. Die Aussteifungsanordnung 215 des Filters 210 gemäß Figur 3 besitzt außerdem ein zusätzliches Aussteifungselement 226, das mit dem axialen Aussteifungselement 220 einstückig ist und gegenüber diesem rechtwinklig abgebogen verläuft, so dass dieses zusätzliche Aussteifungselement 226 das freie Ende 217 des Filterstrumpfs 211 flüssigkeitsdicht überdeckt und mit diesem bevorzugt fest verbunden bzw. verschweißt ist. Das freie Ende 217 bildet somit das Keilende, an dem die beiden einander gegenüberliegenden und keilförmig zueinander verlaufenden Breitseiten 229 des Filterstrumpfs 211 zusammenlaufen und miteinander verbunden sind.

Gemäß einem nicht dargestellten Ausführungsbeispiel kann der Filterstrumpf 211 des Filters 210 auch über seine gesamte Länge keilförmig sein statt nur über eine Teillänge, die den vom Einfüllende 216 ausgehenden Filterstrumpfzylinder anschließt.

## Patentansprüche

1. Filter (10, 110, 210) zum Einsetzen in einen insbesondere gekrümmten Einfüllstutzen eines Behälters, vorzugsweise Tanks für Kraftstoff, Harnstofflösung oder andere Flüssigkeiten, mit einem Filterstrumpf (11, 111, 211), dessen Einfüllende (16, 116, 216) an einem Kopf (12, 112, 212) eines Halters (13, 113, 213) befestigt ist und dessen dem Einfüllende (16, 116, 216) abgewandtes freies Ende (17, 117, 217) abgedeckt oder geschlossen ist, wobei der Filterstrumpf (11, 111, 211) mit einer vom Halterkopf (12, 112, 212) ausgehenden zumindest teilweise längsverlaufenden flexiblen Aussteifungsanordnung (15, 115, 215) versehen ist **dadurch gekennzeichnet, dass** das axiale Aussteifungselement (20, 120, 220) der Aussteifungsanordnung (15, 115, 215) einer Verbindungsnaht des Filterstrumpfes (11, 111, 211) folgt und diese abdeckt.

2. Filter nach Anspruch 1, **dadurch gekennzeichnet, dass** die Aussteifungsanordnung (15, 115, 215) außenumfangsseitig am Filterstrumpf (11, 111, 211) vorgesehen ist.

3. Filter nach Anspruch 1 oder 2, **dadurch gekennzeichnet, dass** die Aussteifungsanordnung (15, 115, 215) ein axiales Aussteifungselement (20, 120, 220) aufweist, das über die gesamte Länge des Filterstrumpfs (11, 111, 211) steg- oder bandartig verläuft.

4. Filter nach mindestens einem der vorhergehenden Ansprüche, **dadurch gekennzeichnet, dass** das axiale Aussteifungselement (20, 120, 220) der Aussteifungsanordnung (15, 115, 215) in eine oder beide der senkrecht zur Längserstreckung des Filterstrumpfs (11, 111, 211) verlaufenden Richtungen flexibel ist.

5. Filter nach mindestens einem der vorhergehenden Ansprüche, **dadurch gekennzeichnet, dass** das axiale Aussteifungselement (120) der Aussteifungsanordnung (115) an einem oder mehreren axial auseinanderliegenden Umfangsbereichen mit umfangsseitig offenen oder geschlossenen Aussteifungsrippen (124, 125) versehen ist.

6. Filter nach mindestens einem der Ansprüche 1 bis 5, **dadurch gekennzeichnet, dass** der Filterstrumpf (11, 111) über seine gesamte Länge schlauchförmig zylindrisch ist und am dem Einfüllende (16,116) abgewandten freien Ende (17, 117) von einer Scheibe (18, 118) aus Filterstrumpfmaterial oder einer undurchlässigen Scheibe abgedeckt und randseitig von einem Ring (21, 121) der Aussteifungsanordnung (15, 115) umgeben ist.

7. Filter nach mindestens einem der Ansprüche 1 bis 5, **dadurch gekennzeichnet, dass** der Filterstrumpf (211) zumindest über eine Teillänge des dem Einfüllende (216) abgewandten Endbereich keilförmig geformt zum freien Ende (217) hin zusammengeführt ist, das von einer Rippe (226) der Aussteifungsanordnung (215) überdeckt ist

8. Filter nach mindestens einem der vorhergehenden Ansprüche, **dadurch gekennzeichnet, dass** die Aussteifungsanordnung (15, 115,215) außenseitig am bzw. um den auf einem Kern gespritzten Filterstrumpf (11, 111, 211) gespritzt ist.

9. Filter nach mindestens einem der vorhergehenden Ansprüche, **dadurch gekennzeichnet, dass** die Aussteifungsanordnung (15, 115, 215) zumindest an Teilbereichen mit dem Filterstrumpf (11, 111, 211) verbunden ist.

10. Filter nach mindestens einem der vorhergehenden Ansprüche, **dadurch gekennzeichnet, dass** er als Partikelfilter aus einem Kunststoffgeflecht geformt ist.

## Claims

1. A filter (10, 110, 210) for insertion into an in particular curved filler neck of a container, preferably a tank for fuel, urea solution, or other liquids, having a filter sock (11, 111, 211), whose filler end (16, 116, 216) is secured to a head (12, 112, 212) of a holder (13, 113, 213) and whose free end (17, 117, 217) remote from the filler end (16, 116, 216) is covered or closed, and the filter sock (11, 111, 211) is provided with a flexible reinforcement device (15, 115, 215) beginning at the holder head (12, 112, 212) and extending at least partially longitudinally, **characterized in that** the axial reinforcement element (20, 120, 220) of the reinforcement device (15, 115, 215) follows along a connecting seam of the filter sock (11, 111, 211) and covers the seam.

2. The filter of claim 1, **characterized in that** the reinforcement device (15, 115, 215) is provided on the outer circumference on the filter sock (11, 111, 211).

3. The filter of claim 1 or 2, **characterized in that** the reinforcement device (15, 115, 215) has an axial reinforcement element (20, 120, 220), which extends in strutlike or striplike fashion over the entire length of the filter sock (11, 111, 211).

4. The filter of at least one of the foregoing claims, **characterized in that** the axial reinforcement element (20, 120, 220) of the reinforcement device (15, 115, 215) is flexible in one or both of the directions extending perpendicular to the longitudinal extent of the filter sock (11, 111, 211).

5. The filter of at least one of the foregoing claims, **characterized in that** the axial reinforcement element (120) of the reinforcement device (115) is provided, on one or more axially spaced-apart circumferential regions, with circumferentially open or closed reinforcement ribs (124, 125).

6. The filter of at least one of claims 1 through 5, **characterized in that** the filter sock (11, 111), over its entire length, is tubularly cylindrical, and on the free end (17, 117) remote from the filler end (16, 116) is covered by a disk (18, 118) of filter sock material or an impermeable disk and is surrounded peripherally by a ring (21, 121) of the reinforcement device (15, 115).

7. The filter of at least one of claims 1 through 5, **characterized in that** the filter sock (211), over at least a partial length of the terminal region remote from the filler end (216), is shaped in wedgelike fashion and is closed toward the free end (217), which is covered by a rib (226) of the reinforcement device (215).

8. The filter of at least one of the foregoing claims, **characterized in that** the reinforcement device (15, 115, 215) is injection molded on the outside or around the filter sock (11, 111, 211), that is injection molded onto a core.

9. The filter of at least one of the foregoing claims, **characterized in that** the reinforcement device (15, 115, 215) is joined to the filter sock (11, 111, 211) at least in some regions.

10. The filter of at least one of the foregoing claims, **characterized in that** it is shaped as a particle filter comprising a synthetic mesh.

## Revendications

1. Filtre (10, 110, 210) destiné à être inséré dans une tubulure de remplissage en particulier courbée d'un récipient, de préférence d'un réservoir pour carburant, solution d'urée ou autres liquides, comprenant un manchon filtrant (11, 111, 211) dont l'extrémité de remplissage (16, 116, 216) est fixée sur une tête (12, 112, 212) d'un support (13, 113, 213) et dont l'extrémité libre (17, 117, 217) qui est opposée à ladite extrémité de remplissage (16, 116, 216) est couverte ou fermée, ledit manchon filtrant (11, 111, 211) étant pourvu d'un ensemble raidisseur (15, 115, 215) flexible partant de ladite tête de support (12, 112, 212) et s'étendant longitudinalement au moins en partie, **caractérisé par le fait que** l'élément raidisseur axial (20, 120, 220) dudit ensemble raidisseur (15, 115, 215) suit une couture de liaison dudit manchon filtrant (11, 111, 211) et couvre celle-ci.

2. Filtre selon la revendication 1, **caractérisé par le fait que** ledit ensemble raidisseur (15, 115, 215) est prévu sur ledit manchon filtrant (11, 111, 211) sur la périphérie extérieure de celui-ci.

3. Filtre selon la revendication 1 ou 2, **caractérisé par le fait que** ledit ensemble raidisseur (15, 115, 215) présente un élément raidisseur axial (20, 120, 220) qui s'étend à la manière d'une entretoise ou bande sur l'ensemble de la longueur du manchon filtrant (11, 111, 211).

4. Filtre selon l'une au moins des revendications précédentes, **caractérisé par le fait que** ledit élément raidisseur axial (20, 120, 220) de l'ensemble raidisseur (15, 115, 215) est flexible dans l'une ou les deux des directions s'étendant perpendiculairement à l'extension longitudinale du manchon filtrant (11, 111, 211).

5. Filtre selon l'une au moins des revendications précédentes, **caractérisé par le fait que** ledit élément raidisseur axial (120) de l'ensemble raidisseur (115) est pourvu, sur une ou plusieurs zones périphériques espacées axialement, de nervures raidisseuses (124, 125) ouvertes ou fermées sur la périphérie.

6. Filtre selon l'une au moins des revendications 1 à 5, **caractérisé par le fait que** ledit manchon filtrant (11, 111) est cylindrique en forme de tuyau flexible sur l'ensemble de sa longueur et, à l'extrémité libre (17, 117) opposée à ladite extrémité de remplissage (16, 116), il est couvert par un disque (18, 118) en matière de manchon filtrant ou un disque imperméable et est entouré sur le bord par un anneau (21, 121) de l'ensemble raidisseur (15, 115).

7. Filtre selon l'une au moins des revendications 1 à 5, **caractérisé par le fait que** ledit manchon filtrant (211), au moins sur une longueur partielle de la zone terminale opposée à l'extrémité de remplissage (216), est réuni en forme de coin vers ladite extrémité libre (217) qui est recouverte par une nervure (226) de l'ensemble raidisseur (215).

8. Filtre selon l'une au moins des revendications précédentes, **caractérisé par le fait que** ledit ensemble raidisseur (15, 115, 215) est injecté sur la face extérieure sur ledit ou bien autour dudit manchon filtrant (11, 111, 211) injecté sur un noyau.

9. Filtre selon l'une au moins des revendications précédentes, **caractérisé par le fait que** ledit ensemble raidisseur (15, 115, 215) est relié, au moins sur des zones partielles, audit manchon filtrant (11, 111, 211).

10. Filtre selon l'une au moins des revendications précédentes, **caractérisé par le fait qu'**il est réalisé en tant que filtre à particules à partir d'un treillis en matière plastique.
